# EUROPEAN PATENT APPLICATION

(11) **EP 3 913 501 A1**
(43) Date of publication of application: **24.11.2021**
(21) Application number: 20175563.4
(22) Date of filing: 19.05.2020
(51) Int. Cl.: G06F 16/901

(54) **A METHOD FOR SCANNING AN OBJECT STORAGE SYSTEM**

(71) Applicant: Datadobi bv, 3012 Wilsele (BE)
(72) Inventor: Van Eeckhoudt, Pepijn, 3010 Kessel-Lo (BE); Verstraeten, Willem, 3080 Vossem (BE); Marivoet, Philip, 3300 Tienen (BE)
(74) Representative: IP HILLS NV

(57) **Abstract**

The present disclosure relates to a method for retrieving a listing of keys associated with respective objects stored in an object storage system supporting a remote object access protocol, the keys comprising respective strings of characters encoded by means of a character encoding, the method comprising: obtaining a start key and an end key for defining a key interval for the listing; subdividing the key interval into key subintervals based on one or more intermediate keys; scanning the key subintervals, thereby retrieving a listing of the keys in the key subintervals; and wherein the subdividing comprises: representing the start key and end key as a start and an end numeric sequence according to the character encoding; and calculating the one or more intermediate keys as one or more intermediate numeric sequences from the start and end numeric sequences by means of arithmetic computation.

## Description

### Technical Field

Various example embodiments relate to a computer-implemented method for retrieving a listing of keys associated with objects stored in an object storage system. Further embodiments relate to a computer program product implementing the method, a computer-readable medium comprising the computer program product and a data processing system for carrying out the method.

### Background

Object storage systems are a data storage architecture that manages data as objects. Such an object comprises a key and a value wherein the key serves as a unique identifier of the value which holds the actual data that is stored. Data can be retrieved from an object storage system by providing the unique identifier upon which the associated data, i.e. value, is returned. Because of the key-value storage, an object storage system stores data in an unstructured manner as opposed to for example a file system. Due to its flexibility and scalability, object addressable storage is provided by various cloud storage providers such as for example by Amazon Web Services S3, and Google Cloud Storage.

Object storage systems may be used for versioned backup of file systems. In such a case, when taking a new snapshot of the file system, each new version of a file system item, e.g. a file or directory, is stored as a new object in the object storage system. At a certain point in time, older expired snapshots of the file system may be removed by removing the appropriate objects from the object addressable storage system thereby reclaiming storage space. When needed, a version of selected file system items or the complete file system may be resolved, i.e. the state of the file system items during the time of a certain versioned snapshot is retrieved or restored.

Object storage systems may also be used for managing data between a cloud-based object storage system and an on-premise object storage system, typically referred to as data repatriation. In such a case, selected objects are copied from the object storage system to the on-premises file system. The copied objects may then be manipulated on the file system and then backed-up again as new objects in the object storage system. Further, objects manipulation such as indexing the stored objects in a database, saving the indexing as a table of contents in a repository, or running analytics on the data of the stored objects require retrieval of the keys associated with respective objects in the object storage systems.

In either of the above use cases, any data manipulation in an object storage system requires retrieval of the keys associated with the objects.

### Summary

It is an object of embodiments of the present disclosure to provide a solution for retrieval of keys in an object storage system in a fast and efficient manner.

The scope of protection sought for various embodiments of the invention is set out by the independent claims. The embodiments and features described in this specification that do not fall within the scope of the independent claims, if any, are to be interpreted as examples useful for understanding various embodiments of the invention.

This object is achieved, according to a first example aspect of the present disclosure, by a computer-implemented method for retrieving a listing of keys associated with respective objects stored in an object storage system supporting a remote object access protocol, the keys comprising respective strings of characters encoded by means of a character encoding, the method comprising:
- obtaining a start key and an end key for defining a key interval for the listing;
- subdividing the key interval into key subintervals based on one or more intermediate keys;
- scanning the key subintervals, thereby retrieving a listing of the keys in the key subintervals; and
wherein the subdividing comprises: representing the start key and end key as a start and an end numeric sequence according to the character encoding; and calculating the one or more intermediate keys as one or more intermediate numeric sequences from the start and end numeric sequences by means of arithmetic computation.

By utilizing the character encoding scheme employed by the object storage system, a character string may be represented by a numeric sequence, i.e. a sequence of numbers, which may be easily processed in the numeric domain and then converted back to a character string. This allows deriving one or more intermediate keys by calculating one or more intermediate numeric sequences from the start and end numeric sequences by applying arithmetic computations, such as arithmetic mean, and converting the derived intermediate numeric sequences into respective strings of characters according to the character encoding.

By performing the subdivision of the key interval in the numeric space rather than in the character space, the key interval subdivision is achieved by a fast and efficient manner by employing low complexity arithmetic computations. Further, subdividing the key interval enables scanning of the respective key subintervals independently from one another. This allows the parallelization of the scanning procedure and therefore retrieval of the listing of keys in a fast and efficient manner.

According to example embodiments, the method further comprising repeating the steps of scanning and the subdividing until the key interval is scanned.

By repeating the steps of scanning and subdividing, an iterative subdivision of the key interval is obtained. The iterative nature allows to control the subdivision of the key interval. This allows to account in an efficient and flexible way for variations in the distribution of the objects' keys in the object storage system.

According to example embodiments, the subdividing comprises obtaining a page of keys starting at the start key, identifying, based on the obtained page of keys, an unscanned key interval, and subdividing the unscanned key interval into the key subintervals.

By first obtaining a page of keys and then subdividing the unscanned key interval, only the unscanned key interval is subdivided. Further, by identifying the unscanned key interval, the subdivision may be controlled more intelligently. For example, the subdivision of the unscanned key interval may be improved by exploiting the alphabet and/or the language used in the naming convention of the retrieved keys or by exploiting the frequency of the characters used in the retrieved keys.

According to example embodiments, the scanning comprising obtaining pages of keys with a selected number of keys.

By varying the number of keys obtained, the scanning of the key subinterval may be further optimized. This allows scanning of the key interval in an optimum way by, for example, limiting the number of pages of keys to be retrieved. Additionally, this further allows limiting the overlap amongst the retrieved listing of keys.

According to example embodiments, the scanning further comprises creating scanning commands for retrieving respective pages of keys in the respective key subintervals and executing the scanning commands in parallel.

Scanning commands are created for obtaining respective pages of keys in the respective key subintervals. By executing the scanning commands in parallel, the key interval may be scanned in a fast and efficient manner. The overall time needed to scan the key interval thus decreased proportionally with the number of scanning commands executed in parallel.

According to example embodiments, the calculating comprises adjusting the one or more intermediate numeric sequences to represent a valid string of characters according to the character encoding.

Adjusting the numeric sequences may be necessary when a number within a respective numeric sequence corresponds to an invalid character. The adjustment of the numbers within the numeric sequence may be performed by, for example, replacing the number with its nearest higher or lower number corresponding to a valid character.

According to further example embodiments, wherein the calculating further comprises adjusting the one or more intermediate numeric sequences according to a maximum byte limit and/or according to a maximum length of a numeric sequence.

Adjusting may be needed when the byte representation of the resulting numeric sequence, i.e. the number of bytes needed to represent a numeric sequence in the byte space, exceeds the maximum number of bytes allowed by the object storage system for storing a key associated with an object. Further, adjustment may be needed when the length of the resulting numeric sequence exceeds the maximum length of a numeric sequence allowed by the object storage system. By assuring the respective intermediate numeric sequences do not exceed the maximum byte limit and/or the maximum length limit, the intermediate keys are acceptable by the object storage system.

According to example embodiments, the selected number of keys is based on statistical information derived from the obtained pages of keys.

By utilizing statistical information derived from the obtained pages of keys knowledge about the distribution of the keys within the key interval may be obtained. For example, a histogram may be created. The histogram may be updated iteratively, whenever a new listing of keys is retrieved. Gaining knowledge of the distribution of the keys allows selecting the size of the page and, therefore, the number of keys being retrieved, in accordance with the distribution. This allows scanning of the key interval in an optimum way and, further, for limiting the overlap amongst the retrieved listing of keys.

According to example embodiments, the subdividing is further based on statistical information derived from the obtained pages of keys.

By taking into account statistical information derived from the previously obtained pages of keys, the subdividing may be performed in an optimum way. For example, by deriving a histogram from the obtained keys, knowledge of the usage distribution of keys within the key interval may be derived. The knowledge may for example help identifying the alphabet or the language used in the naming convention of the keys, the number of keys within a specific key subinterval and so on. This allows determining the intermediate keys in a smart way and in turn subdividing the key interval optimally while limiting the overlap amongst the retrieved pages of keys.

According to example embodiments, the statistical information is derived by means of heuristic analysis.

By employing heuristic analysis, statistical information from the obtaining listings of keys is derived quickly and efficiently. Employing statistical information allows obtaining an optimum subdivision of the key interval. This further allows limiting of the overlap amongst the retrieved pages of keys. For example, the most commonly used characters and symbols within a key interval may be derived. This allows subdividing the key interval in an optimum way. For example, if Latin characters and symbols are more frequently used than Cyrillic characters and symbols, the key interval may be subdivided more densely for the Latin characters and symbols and less densely for the Cyrillic characters and symbols.

According to example embodiments, the character encoding is a Unicode encoding. Different Unicode encoding format may be employed. Unicode encoding assigns unique numbers as codepoints to respective characters and defines how the respective codepoints are converted into byte sequences. Depending on the mapping scheme from the numeric space into the byte space, different Unicode encoding formats are possible. Examples of Unicode encoding formats include the 8-bit Unicode Transformation Format, UTF-8, and the 16-bit Unicode Transformation Format, UTF-16.

According to example embodiments, the object storage system is a cloud-based storage system.

According to a second example aspect, a computer program product is disclosed, the computer program product comprising computer-executable instructions for causing a computer to perform the method according to the first example aspect when the program is run on the computer.

According to a third example aspect, a computer readable storage medium is disclosed, the computer readable storage medium comprising the computer program product according to the second example aspect.

According to a fourth example aspect, a data processing system is disclosed, the data processing system comprising programmed for carrying out the method according to the first example aspect.

The various example embodiments of the first example aspect applied as example embodiments to the second, third, and fourth example aspects.

### Brief Description of the Drawings

Some example embodiments will now be described with reference to the accompanying drawings.
FIG.1 shows steps according to an example embodiment of the present disclosure for retrieving a listing of keys associate with objects stored in an object storage system;
FIG.2 shows the steps of verification and subdivision of FIG.1 in more detail;
FIG.3A shows an exemplary key interval scanned according to an example embodiment of the present disclosure;
FIG.3B shows an exemplary key interval scanned according to an example embodiment of the present disclosure;
FIG.4 shows an exemplary key interval scanned according to an example embodiment of the present disclosure;
FIG.5 shows an exemplary distribution of objects' keys according to an example embodiment of the present disclosure;
FIG.6 shows an example embodiment of a suitable computing system 600 for performing one or several steps in embodiments of the invention.

### Detailed Description of Embodiment(s)

The present disclosure relates to retrieving a listing of keys associated with respective objects stored in an object storage system. An object storage system stores data as objects. An object comprises a key and a value wherein the key, i.e. a string of characters, serves as a unique identifier of the value which holds the actual data that is stored. Data can be retrieved from the object storage system by providing the unique identifier upon which the associate data, i.e. value, is returned.

The object storage system may be a cloud-based object storage system interfaceable by a predefined application programming interface, API, over a computer network such as the Internet. An example of a cloud-based object storage system is Amazon S3 or Amazon Simple Storage Service as offered by Amazon Web Services, AWS, that provides such object storage addressable through a web-based API. Another example is Google Cloud Storage by Google providing RESTful object storage on the Google Cloud Platform infrastructure.

An object storage system stores the data in an unstructured manner as opposed to for example a file system. Managing the objects in the object storage system requires retrieval of the keys associated with the respective objects. Keys are retrieved by issuing a scanning command. To protect the data in the object storage system, the object storage systems sets a limit to the number of keys retrieved by a scanning command. A scanning command thus returns a list of keys limited to a page or a partition. A scanning command allows selecting the number of keys to be retrieved within the page limit. The page limit may differ amongst the different object storage systems. Typically, the page limit allows retrieving a maximum of 1000 keys. Further, the scanning command allows defining a start key which allows retrieval of keys starting with the start key. The start key is a string of characters that may comprise one or more characters or symbols. That is, a start key may be a letter, for example, the letter "p", a word, for example, the word "project", or a string of characters, for example "project/". In the first example, all keys equal to or larger than the letter "p" would be retrieved. In the second example, all keys equal to or larger than the word "project" would be retrieved. In the third example, all keys equal to or larger than the characters "project/" would be retrieved. The keys are retrieved on a page-by-page basis by issuing one or more scanning commands in sequential order until all keys equal to or larger than the start key are obtained. In the first example, if the keys equal to or larger than the letter "p", do not exceed the page limit, all keys would be retrieved by issuing or executing a single scanning command. Otherwise, one or more additional scanning commands will be issued until there are no more keys equal to or larger than the start key. The scanning commands are executed in sequential order with each subsequent command instructed to retrieve keys following the last obtained page. In other words, to obtain a listing of the keys in the object storage system, one or more scanning commands are issued until all keys are retrieved. To assure all keys are retrieved, the commands are executed in sequential order with each subsequent command instructed to retrieve keys following the last obtained page. The scanning is completed when a scanning command returns a parameter indicating that all keys equal to or larger than the start key have been retrieved.

According to example embodiments, methods are provided for retrieving a listing of keys associated with objects in an object storage system. Such methods may be provided as part of a computer program that offers the keys retrieval functionality, i.e. obtaining a listing of keys. Such a computer program may be executed remotely from the object storage system. Commands for the retrieval of the keys may thus be sent remotely over a computer network such as the Internet to the object storage system.

The present disclosure proposes parallelization of the retrieving of the listing of keys associated with respective objects stored in an object storage system by subdividing a key interval within which objects' keys are to be retrieved into key subintervals and by scanning the individual key subintervals in parallel. Various ways of subdividing schemes may be employed.

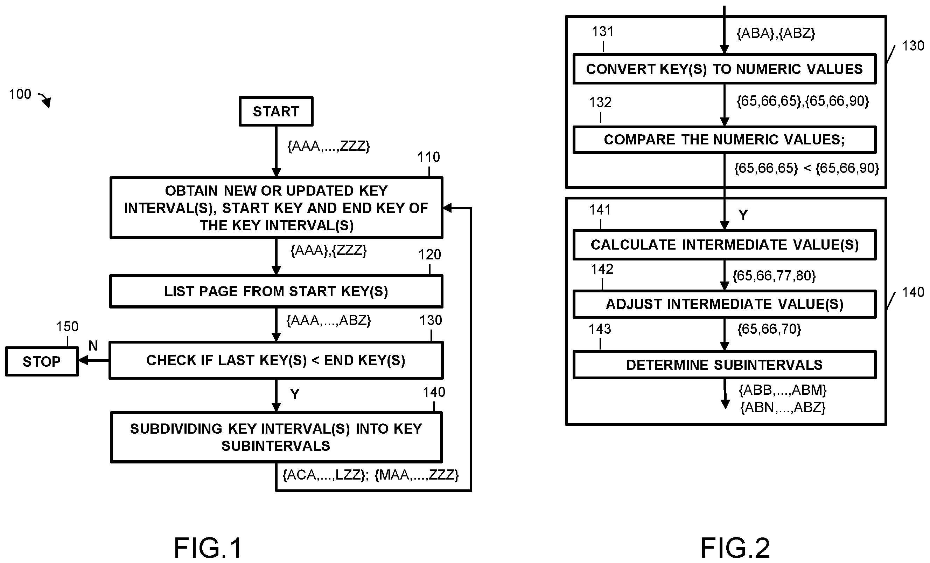

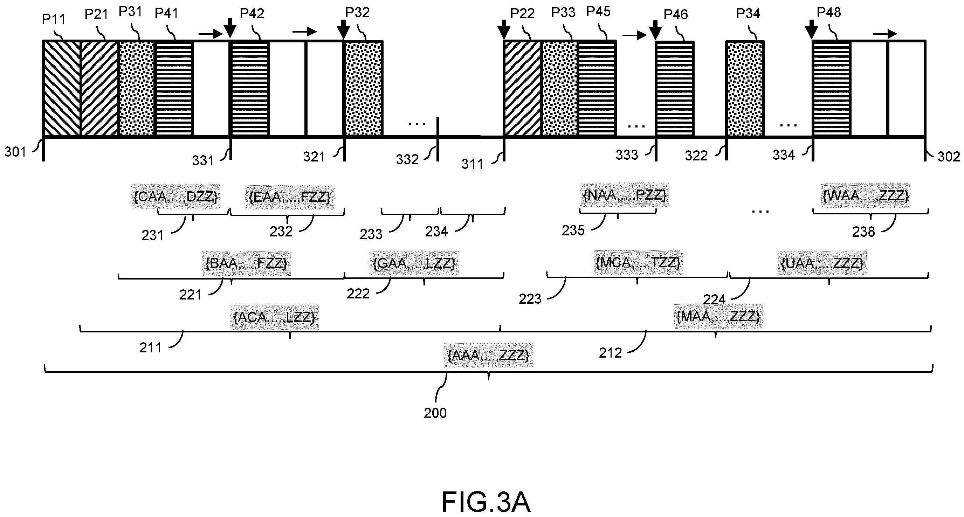

The method will be now explained with reference to FIG.1, FIG.2, and FIG.3A. FIG.1 shows steps performed by the API for retrieving a listing of keys associated with respective objects stored in an object storage system, FIG.2 shows in greater detail some of the steps of FIG.1, and FIG.3A shows an exemplary key interval scanned according to an example embodiment of the method of the present disclosure.

In a first step 110, a key interval 200 defined by a start key 301, e.g. "AAA" and an end key 309, e.g. "ZZZ", is obtained. In a next step 120, a scanning command is issued to obtain a page of keys starting at the start key "AAA". Page P11 is thus retrieved. Typically, the obtained page of keys comprises a list of keys ordered in an order defined by the character encoding employed by the object storage system. For example, the list may contain keys from "AAA" to "ABZ". In the following step 130, it is verified whether all keys within the key interval have been retrieved.. As the retrieved page contains an ordered list of keys, the verification step may be performed by simply comparing the last key of the obtained page with the end key of the key interval, i.e. by comparing the character string "ABZ" with the character string "ZZZ". The comparison of the keys allows identifying an unscanned key interval defined by the key following the last obtained key and the end key, i.e. {"ACA",...,"ZZZ"}. If the last obtained key is smaller than the end key, the method proceeds to step 140 where the key interval 200 is subdivided into, e.g. two key subintervals 211 and 212, each defined by its own start and end key. The subdivision is performed by deriving an intermediate key 311, i.e. "LZZ", within the unscanned key interval to obtain two key subintervals based on the intermediate key. In this example, a first key subinterval 211 is defined to include the range of keys starting at key following the last obtained key, i.e. "ACA", 302 and up to and including the intermediate key, i.e. "LZZ", 311. The second key subinterval 212 is defined to include the range of keys starting by the key following the intermediate key, i.e. "MAA" and up to and including the end key, i.e. "ZZZ", 309.

The method proceeds back to the first step 110 to update the initial key interval with the newly defined subintervals 211 and 212. The key interval 200 is thus replaced by the two subintervals 211 and 212. The method continues to step 120 to issue, for a respective key subinterval, a scanning command for retrieving a page of keys starting at the start key of the respective key subintervals. Two commands for scanning the respective key subintervals are issued, thereby retrieving a page of keys from a respective subinterval, i.e. pages P21 and P22. The method proceeds with verifying whether all keys within the respective key subintervals have been retrieved. If not, unscanned subintervals are identified and subdivided further. In this example, the unscanned subintervals are subdivided to obtain four new key subintervals 221 to 224. The method may proceed further by repeating steps of retrieving a page of keys from the respective subintervals, identifying unscanned subintervals, and subdividing the unscanned subintervals further until all keys within the key interval 200 are retrieved.

As the respective commands scan different key subintervals, the commands may be executed as parallel threads. As a result, parallel threads are instantiated iteratively. At the first iteration, one thread is instantiated, thereby retrieving one page of keys, i.e. P11. At the second iteration, two threads are instantiated, thereby retrieving two pages of keys, i.e. P21 and P22. At the third iteration 4 threads are instantiated, thereby retrieving pages P31 to P34. At the fourth iteration, 8 threads are instantiated, thereby retrieving pages P41 to P48, and so on until the maximum number of parallel threads supported by the API is reached. For example, an object storage server may support 8, 16, or 64 parallel threads listing objects. Once the limit of parallel threads has been reached, the method proceeds with retrieving pages of keys in the respective key subintervals sequentially as described above and until the key subintervals have been scanned. For example, if the API support 8 parallel threads, the method will proceed by scanning the subintervals 231 to 238 by retrieving pages of keys within the respective subinterval as indicated by the horizontal arrows. All keys within a key subinterval are considered obtained once it is verified that the last key of the obtained page is equal or bigger than the start key of the subsequent key subinterval. Overlap amongst the retrieved keys at the borders between key subintervals (see vertical arrows) may occur.

Depending on the naming convention of the objects stored in the object storage system, i.e. depending on their respective keys, the distribution of the keys within the key interval may be irregular. For example, many keys might contain a specific number, a specific character, or a specific string of characters. Further, many keys may comprise characters from Latin, Cyrillic, or another alphabet. As a result, the number of keys to be retrieved within the respective key subintervals may differ. Thus, in some cases, it may be sufficient to issue a single scanning command to retrieve all keys within a subinterval, while in other cases, it may be necessary to issue tens or even hundreds of scanning commands to retrieve all keys within that subinterval. As a result, the scanning of some subintervals may be completed prior to the scanning of others. When all keys within a key subinterval have been retrieved, the method proceeds to step 150 to free the scanning thread. The scanning thread may thus be utilized again for the scanning of another unscanned key subinterval if needed. When a sufficient number of threads are freed and unscanned key subintervals are identified, the method continues from step 140 by subdividing further the unscanned subintervals and instantiating anew parallel threads until the complete key interval has been scanned. This assures that all parallel threads remain occupied until the complete key interval has been scanned.

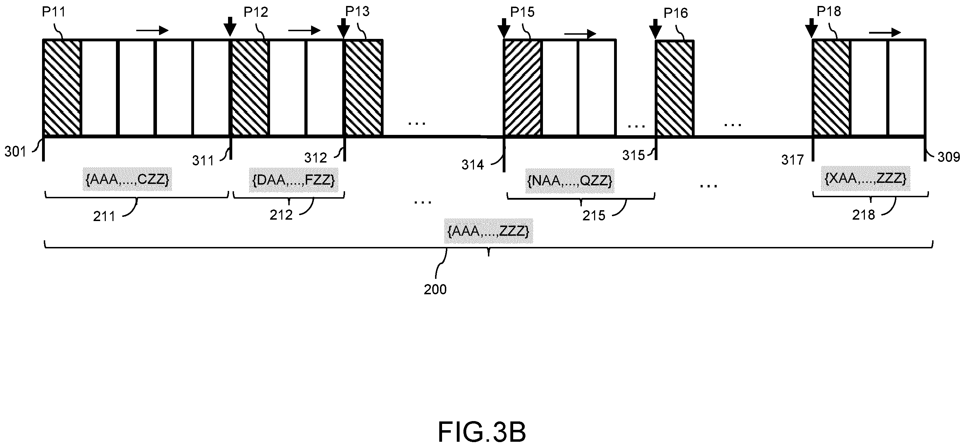

As another example, the parallelization of the scanning of the key interval may be achieved by dividing the key interval 200 directly into a number of subintervals corresponding to the number of parallel threads supported by the API or configured by an administrator. For example, if the API supports eight parallel threads, the key interval 200 may be directly subdivided into eight subintervals 211 to 218 as shown in FIG.3B. Eight parallel threads are thus instantiated, one thread for scanning a respective subinterval. As there are no more threads available, the scanning of the respective subintervals is performed on a page-by-page basis, i.e. by issuing scanning commands for retrieving keys in sequential order (as indicated by the horizontal arrows) starting from the respective start key and until the respective key subintervals have been scanned completely.

Threads will be freed as soon as a respective key subinterval has been scanned. As the distribution of the keys associated with the respective objects within the key interval may differ, the scanning of some key subintervals may be completed sooner than others. Thus, to further improve the efficiency of the keys' retrieval and to assure all parallel threads remain occupied until the complete key interval has been scanned, once one or more threads have been freed, the remaining unscanned key interval may be subdivided further to assure all freed threads are occupied.

Similarly to the above-described embodiment, all keys within a key subinterval are considered obtained once it is verified that the last key of the obtained page indicates that the end of the subinterval has been reached, i.e. the last key is bigger than the start key of the following subinterval.

FIG.2 shows in more detail the steps of verification 130 and subdividing 140 performed by the method according to the present disclosure. The verification step 130 is performed by comparing the respective keys in the numeric domain rather than in the character domain. For this purpose, the character encoding employed by the object storage system is utilized. A character encoding defines how the mapping from a character space into a numeric space and then from the numeric space into a byte space is performed. In other words, a character encoding defines how a character is mapped to a codepoint and how that codepoint is then mapped to a byte sequence. The codepoint is a unique number which is represented by one or more bytes in the byte space. The intermediate mapping to codepoints defines the ordering of the characters in the characters space and in the bytespace. For example, numbers are followed by letters and letters are followed by special characters such as mathematical symbols and pictographic symbols or emoji.

An example of character encoding is Unicode encoding. The Unicode encoding assigns unique integer numbers as codepoints to respective characters and defines how the respective codepoints are converted into byte sequences. Depending on the mapping scheme from the numeric space into the byte space, different Unicode encoding formats are possible. One example is the 8-bit Unicode Transformation Format, UTF-8, which is the most common format supports one to four bytes with most frequently used characters, e.g. Latin characters, represented with one byte and the least frequently used once, e.g. mathematical symbols and pictographic symbols or emoji, with four bytes. For example, the integer numbers 65, 66 and 67 are respectively assigned to the letters "A", "B" and "C" and then represented as one byte when converted into binary format. Further, the unique integer numbers are selected such that the alphanumeric order of the characters is preserved after their conversion into the numeric domain. For example, the character "B" which in the alphanumeric order lies in between the characters "A" and "C" is represented by the integer number 66 which is an integer number laying in between the integer numbers 65 and 67 representing the characters "A" and "C".

Thus, in the first step 131, the method represents the respective keys according to the Unicode encoding, as a sequence of numbers. The key, which is a string of one or more characters, e.g. "AAA", is thus represented by a sequence of numeric values, e.g. {65, 65, 65}. In the next step 132, the method compares the numeric representations of the respective keys.

As shown in the example of FIG.2, the last key of the retrieved page of keys, i.e. the key "ABA", represented as the numeric sequence {65, 66, 65} and the end key of the key interval, i.e. "ABZ", represented by the number sequence {65, 66, 90} are compared by comparing their respective numeric representations. The comparison is performed by comparing the respective numbers of the respective numeric sequences one by one starting from the first number. That is, first the number 65 is compared to 65. If the former value is lower than the latter, then the last retrieved key is smaller than the end key. If the former value is equal to the latter, then the subsequent numbers are compared and so on, until a comparison decision is reached. If the comparison decision is that the former value is higher than the latter, in other words when the last retrieved key is larger than the end key, the method proceeds to step 150 as described above.

If at step 132 the decision is that the last retrieved key is smaller than the end key, the method proceeds to step 141 to calculate one or more intermediate numeric sequences having value lying in between the respective keys. The intermediate values are calculated by applying arithmetic computations. For example, the arithmetic mean of the respective numeric sequences may be calculated. For example, the arithmetic mean value of the above sequences, i.e. {65, 66, 65} and {65, 66, 90}, is the numeric sequence {65, 66, 77.5}.

In the next step 142, adjustment of the calculated intermediate values is performed. As described above, Unicode characters are mapped to integer numbers and vice versa. Thus, if the intermediate value contains a fractional number, the fractional number needs to be represented by an integer value. In the above example, the fractional number 77.5 needs to be represented as an integer number. Mathematically, the value 77.5 is between 77 and 78 numeric values. One possible way would be to represent the fractional number 77.5 as a series of the integer numbers 77 and another number, e.g. 80. The fractional number would thus be represented as a sequence {77, 80}. As a result, the intermediate numeric sequence would become {65, 66, 77, 80} which corresponds to a valid character string with four characters, i.e. "ABMP". Although, this intermediate key "ABMP" lies in between the respective keys "ABA" and "ABZ", it contains four characters rather than three.

In some cases, however, there may be a restriction imposed on the length of the keys, exceeding the allowed maximum number of characters supported by the object storage system. In practice, the length of the key is typically limited to 1024 characters. However, for the sake of simplicity in the example below the limit on the length of the key is set to 3 characters. Hence, the intermediate numeric sequence would be further adjusted to represent a character string of three characters that fall in between the respective keys. Possible ways would be to round the value 77.5 to its nearest higher or lower integer number. For example, rounding up the value 77.5 to its nearest lower integer number would result in an intermediate numeric sequence with a value {65,66,77} which corresponds to the character string "ABM".

Additional adjustments may be further needed. For example, the currently valid Unicode codepoint range between [0,1114111]. However, certain integer values may not be used. These integer values are either undefined or may not be used in the character encoding. Additionally, it is preferred not to use characters known to cause problems with certain object storage systems. Thus, there is a chance the intermediate numeric sequence to contain one or more of these invalid integer values. To mitigate this, numeric subranges corresponding to undefined integer values or characters causing problems with different server implementations are marked as invalid. Thus, if the value of the mid_CP lies within an invalid numeric subrange [low_CP, high_CP], then the computed mid_CP is replaced with, for example, the value corresponding to low_{_}CP - 1.

Further, object storage systems impose a certain numeric limit on the maximum number of bytes used to represent a key. As a character may be encoded in a binary format as one or four bytes, it is possible that the calculated intermediate key may exceed this numeric limit when converted into binary format. Suppose the object storage system places a 1024-byte limit. Thus, when computing an intermediate key between two respective keys that are both 1023 bytes long, it is possible that the resulting intermediate key requires more bytes than the allowed 1024-byte limit. For example, for a key of a sequence of 1023 "A" characters, i.e. AAAAA....AAA, and an end key of a sequence of 1022 "A" characters followed by a "B" character, i.e. AAAAA... AAB, there is no integer value between the numeric representations of the characters "A" and "B". Thus, to derive the intermediate key, an additional codepoint needs to be appended to the intermediate numeric sequence. Since there is only one byte remaining before the 1024-byte limit for the key length is reached, it is necessary to assure that the additional codepoint appended to the intermediate numeric sequence is represented by a single byte in UTF-8 encoding. To assure the intermediate sequence does not exceed the numeric limit of 1024 bytes, mapping back and forth between integer and binary representation is required. For example, the intermediate key satisfying the numeric byte limit may have a sequence of 1023 "A" characters followed by the character "M".

Another case when adjustment of the intermediate numeric sequence may be needed is when computing an intermediate key between two respective keys that are both 1024 bytes long. Similarly to the above example, it is possible that the resulting intermediate key requires more bytes than the allowed 1024-byte limit. For example, for a key of a sequence of 1024 "A" characters, i.e. AAAAA ...AAA, and a key of a sequence of 1023 "A" characters followed by a "D" character, i.e. AAAAA .. AAD, there is no integer value between the numeric representations of the characters "A" and "D". The intermediate numeric sequence would be 1023 numbers with value 65 followed by the fractional value 66.5, i.e. {65, 65, 65, ... , 65, 66.5}. Thus, to derive the intermediate key, one possible way would be to round the fractional number 66.5 to an integer, e.g. 66, and append an additional number. For example, the number 77 corresponding to the letter "M" may be appended. This, however, would result in an intermediate key exceeding the 1024-byte length limit. In this case, to assure the intermediate sequence does not exceed the byte limit of 1024 bytes, it suffices to round up the fractional number to an integer without appending an additional number.

Another example when the 1024-byte limit is exceeded would be when computing an intermediate key between keys that are both 1024 bytes long. For example, for a key of a sequence of 1024 "A" characters, i.e. AAAAA....AAA, and an end key of a sequence of 1023 "A" characters followed by a "B" character, i.e. AAAAA... AAB, there is no integer value between the numeric representations of the characters "A" and "B". Thus, to adjust the numeric representation of the intermediate key needs to be adjusted. However, the intermediate key is already 1024-byte long and there is no character in-between the characters "A" and "B", it is not possible to derive a valid intermediate key and therefore it is not possible to subdivide the key interval further.

Referring back to FIG.2, once the adjustment of the intermediate numeric sequences is performed, the method proceeds to the next step 143, where the method determines, based on the derived intermediate numeric sequences, the start and end numeric sequences representing the start and end keys of the key subintervals. If only one intermediate numeric sequence is derived, a start and end keys for two key subintervals will be derived. For example, the first subinterval would have as a start key, the key following the last retrieved key, e.g. "ABB", and the calculated intermediate key, i.e. "ABM", and the second subinterval would have as a start key, the key following the calculated intermediate key, i.e. "ABN" and as end key, the end key of the initial key interval "ABZ".

According to example embodiments, statistical information may be derived from the obtained listings of keys. For example, a histogram showing the distribution of the keys within the key interval may be derived. The histogram may be updated each time a new page of keys is retrieved. By analysing the distribution, the subdivision of the key interval may be optimized. For example, one or more peaks in the histogram may be observed illustrating that majority of the keys associated with respective objects are falling within specific key subinterval.

Alternatively, heuristic analysis of the obtained listing of keys may be employed to derive the statistical information. For example, the most commonly used characters and symbols within a key interval may be derived. For example, if Latin characters and symbols are more frequently used than Cyrillic characters and symbols, the key interval may be subdivided more densely for the Latin characters and symbols and less densely for the Cyrillic characters and symbols.

The obtained statistical information may be stored and used later on when the key interval is scanned anew. For example, the histogram derived from a previous scanning of the key interval may be used to determine an initial subdivision of the key interval. During the retrieval of the keys, the histogram may be gradually updated when one or more pages of keys are retrieved.

The statistical information may be used to subdivide that key interval more densely within the areas where, for example, the histogram peaks are observed, and less densely in the other areas. This allows for obtaining an optimum subdivision of the key interval quickly and efficiently. Further, it allows limiting of the overlap amongst the retrieved pages of keys at the borders between key subintervals.

To further optimize the scanning of the key interval and limit the overlap amongst the retrieve pages of keys at the border between the key subintervals, the number of keys retrieved by a scanning command may be varied dynamically. Different approaches are possible depending on whether knowledge about the distribution of the objects' keys within the key interval is available or not.

One possible way, when no such knowledge is available, would be to gradually increase the number of retrieved keys per page until certain criteria are met, for example, until it is observed that half of a respective subinterval is scanned by a single scanning command. For example, in the first iteration, the command may retrieve 10 keys. In the next iteration, the number may be increased to, e.g. 100 of keys and so on. If, however, an overlap amongst the retrieved keys is observed, the number of the retrieved keys per page may be decreased accordingly. This way the number of the retrieve keys per page may be gradually varied during the scanning of the respective key subintervals.

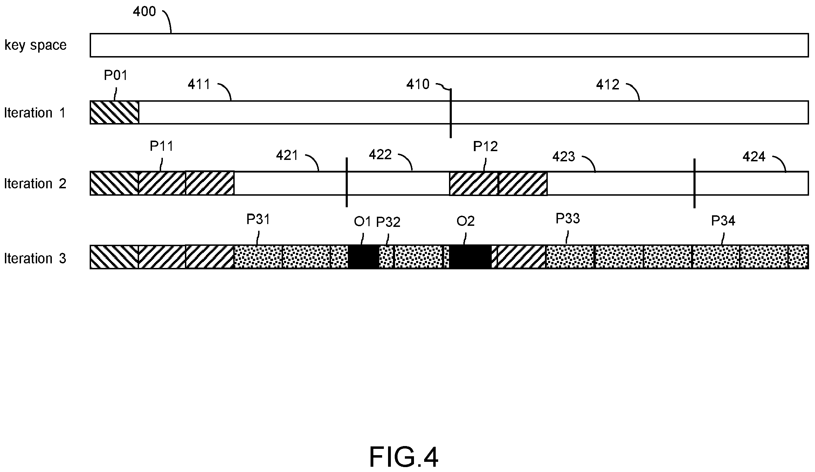

Instead of gradually increasing the number of the retrieved keys per subinterval, an alternative approach would be to double the number of requested keys with every scanning iteration but deliver the retrieved keys in smaller chunks as shown in FIG.4. For example, at a first scanning iteration, a scanning command may be set to request 100 keys and retrieve them in a single chunk of 100 keys. The second iteration the scanning command may be set to request double the number of keys, e.g. 200 keys, but still, deliver them in chucks of 100 keys, and so on. Once, the overlap between the retrieved keys is observed, the number of keys may be decreased.

In the example of FIG.4, the first scanning iteration for key interval 300 would retrieve one page of 100 keys, P1. The unscanned key interval is subdivided into two subintervals 311 and 312 and a second scanning iteration is performed. This time, two pages of 100 keys, P2, are retrieved from each respective subinterval 311 and 312. Again, the unscanned key intervals are subdivided, thereby obtaining four key subintervals 321 to 324 followed by a third scanning iteration to retrieved four pages of keys, P4, in the respective subintervals 321 to 324 is performed. Each time a page of keys is retrieved it is verified whether all keys within the respective key subinterval are retrieved. If that is the case, the scanning of all key subintervals is completed after the retrieval of the third page of keys. Two overlaps O1 and O2 in the retrieved pages of keys are observed. To limit the overlap, the number of keys to be retrieved in the next scanning iteration may be decreased depending on the number of keys overlapping in the O1 and O2 regions. In this example, a fourth scanning iteration will not be performed as the key interval has been scanned and all objects' keys were retrieved.

Alternatively, the number of keys per page may be dynamically varied based on statistical information obtained from the retrieved pages of keys during the scanning or based on the statistical information obtained from a previous scanning. For example, for a key subinterval containing fewer keys, the requested number of keys per scanning command may be smaller than for a key subinterval containing a large number of keys.

Further, the tradeoff between the overlap amongst the retrieved keys versus the number of retrieved keys per page may be driven for example by one of or a combination of the relative cost for issuing a scanning command, the bandwidth consumption of a scanning command, and the overall performance and latency.

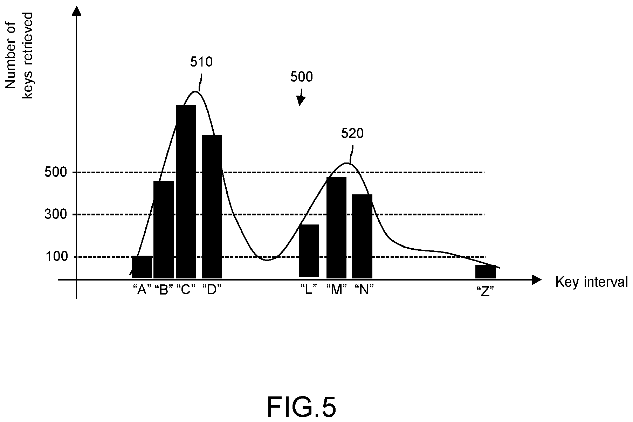

FIG.5 shows an example histogram within a key interval {"A",...,"Z"} showing two main peaks 510 and 520 in the distribution 500 of the objects' keys obtained from a previous scanning. From the distribution, it can be derived that there are 100 object's keys starting with the letter "A", 450 object's keys starting with the letter "B" and around 50 keys starting with the letter "Z". In this case, the subdivision may be performed by allocating one subinterval for a respective character and retrieving a fixed number of keys per page, e.g. 50 keys. Alternatively, the number of keys may be varied according to the number of objects keys observed in the distribution. For example, for the subinterval "A", the page may be set to retrieve 100 keys which allow retrieving all objects' keys with a single scanning command, while for the subintervals from "B" to "D", the page may be set to retrieve 250 keys, thereby retrieving the object's keys with two or three scanning commands.

Some object storage systems may use a non-standard characters sorting. Instead of defining the characters order in the numeric space as detailed above, the sorting may be defined in the byte space, for example, by ordering the UTF-16 byte representation of the respective codepoints. In such cases, it is necessary to detect the ordering scheme of the characters before comparing the numeric representations of the respective keys in step 132 and the determining of the subintervals in steps 141 to 143. Otherwise, there is a risk of not retrieving some of the keys during the scanning of the object storage system. This may be achieved in a number of ways. One possible way would be by interpreting how the keys are ordered from the retrieved pages of keys. Another way would be by writing specific keys in the object storage system, retrieving the specific keys and checking their order. For example, by writing the codepoints U+E000 and U+10000, herein listed in hexadecimal format, and checking their order. A further possibility would be by detecting the software version running on the object storage system and identifying whether the running software version uses a specific sorting order. Yet another way would be by pre-setting the sorting order based on information from vendor of the object storage system. In case an alternative sorting order is detected, the steps shown in FIG.2, i.e. steps 132 and 141-143, are adjusted to take into account the new sorting order.

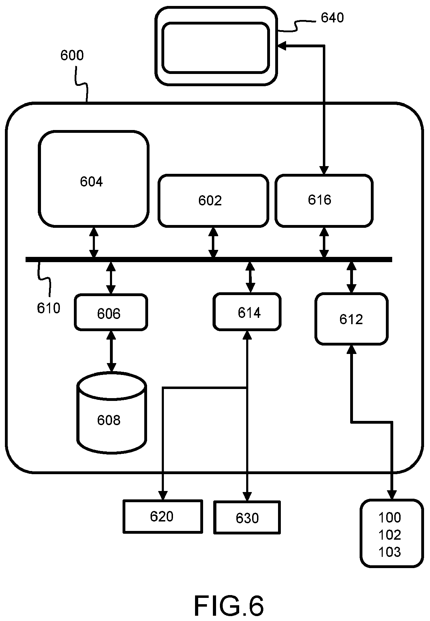

FIG.6 shows a computing system 600 suitable for performing the above described steps according to various example embodiments. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory, RAM, or another type of dynamic storage device that stores information and instructions for execution by processor 602 and/or a read only memory, ROM, or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 701, 702, 703. The communication interface 612 of computing system 600 may be connected to such another computing system by means of a local area network, LAN, or a wide area network, WAN, such as for example the internet. Storage element interface 606 may comprise a storage interface such as for example a Serial Advanced Technology Attachment, SATA, interface or a Small Computer System Interface, SCSI, for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, - ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for retrieving a listing of keys associated with respective objects stored in an object storage system supporting a remote object access protocol, the keys comprising respective strings of characters encoded by means of a character encoding, the method comprising the steps of :
- obtaining a start key and an end key for defining a key interval for the listing;
- subdividing the key interval into key subintervals based on one or more intermediate keys;
- scanning the key subintervals, thereby retrieving a listing of the keys in the key subintervals; and
wherein the subdividing comprises: representing the start key and end key as a start and an end numeric sequence according to the character encoding; and calculating the one or more intermediate keys as one or more intermediate numeric sequences from the start and end numeric sequences by means of arithmetic computation.

2. The computer implemented method according to claim 1, further comprising repeating the steps of scanning and the subdividing until the key interval is scanned.

3. The computer implemented method according to claims 1 or 2, wherein the subdividing comprises obtaining a page of keys starting at the start key, identifying, based on the obtained page of keys, an unscanned key interval, and subdividing the unscanned key interval into the key subintervals.

4. The computer implemented method according to claim 3, wherein the scanning comprises obtaining pages of keys with a selected number of keys.

5. The computer implemented method according to claims 3 or 4, wherein the scanning further comprises creating scanning commands for retrieving respective pages of keys in the respective key subintervals and executing the scanning commands in parallel.

6. The computer implemented method according any of the preceding claims, wherein the calculating comprises adjusting the one or more intermediate numeric sequences as to represent a valid string of characters according to the character encoding.

7. The computer implemented method according to claim 6, wherein the calculating further comprises adjusting the one or more intermediate numeric sequences according to a maximum byte limit and/or according to a maximum length of a numeric sequence.

8. The computer implemented method according to any one of claims 4 to 7, wherein the selected number of keys is based on statistical information derived from the obtained pages of keys.

9. The computer implemented method according to any one of claims 4 to 8, wherein the subdividing is further based on statistical information derived from the obtained pages of keys.

10. The computer implemented method according to claim 9, wherein the statistical information is derived by means of heuristic analysis.

11. The computer implemented method according to any of the preceding claims, wherein the character encoding is a Unicode encoding.

12. The computer implemented method according to any of the preceding claims, wherein the object storage system is a cloud-based storage system.

13. A computer program product comprising computer-executable instructions for causing a computer to perform the method according to any one of claims 1 to 12 when the program is run on the computer.

14. A computer readable storage medium comprising the computer program product according to claim 13.

15. A data processing system programmed for carrying out the method according to any one of claims 1 to 12.
